# EUROPEAN PATENT SPECIFICATION

(11) **EP 2 549 778 B1**
(45) Date of publication and mention of the grant of the patent: **15.06.2016**
(21) Application number: 11844921.4
(22) Date of filing: 22.04.2011
(51) Int. Cl.: H04W 4/14, H04W 12/02, H04L 29/06

(54) **METHOD AND SYSTEM FOR ENCRYPTING SHORT MESSAGE**
VERFAHREN UND SYSTEM ZUM VERSCHLÜSSELN VON KURZNACHRICHTEN
PROCÉDÉ ET SYSTÈME POUR CHIFFREMENT DE MESSAGE COURT

(30) Priority: 01.12.2010 CN 201010568985
(43) Date of publication of application: 23.01.2013
(73) Proprietor: ZTE Corporation, Shenzhen, Guangdong 518057 (CN)
(72) Inventor: SUN, Junsheng, Shenzhen Guangdong 518057 (CN); ZHANG, Pengbo, Shenzhen Guangdong 518057 (CN); CAO, Yaobin, Shenzhen Guangdong 518057 (CN); DENG, Fangmin, Shenzhen Guangdong 518057 (CN); XUE, Tao, Shenzhen Guangdong 518057 (CN); YU, Song, Shenzhen Guangdong 518057 (CN); YANG, Yulin, Shenzhen Guangdong 518057 (CN)
(74) Representative: D'Halleweyn, Nele Veerle Trees Gertrudis
(86) International application number: PCT/CN2011/073192
(87) International publication number: WO 2012/071846

(56) References cited:
- WO-A1-99/35784
- CN-A- 101 056 176
- CN-A- 101 188 496
- CN-A- 101 478 733
- CN-A- 101 616 142
- CN-A- 101 720 071
- US-A1- 2009 265 552
- US-A1- 2009 325 543

## Description

### Technical Field

The present invention relates to the mobile communication field, and in particular, to a method and system for implementing short message encryption.

### Background Art

With the increasing popularization of mobile phone terminals, and SMS (short message services) has played a more and more significant role in people's daily life and has become an important communication way for people. Just because of the popularization of SMS, the security problem of SMS become more and more important. Because in many cases the short message will transmit important information, and once the information is intercepted, huge loss will be brought to the person. Due to the current fixed mechanism of SMS, the content of the message is stored in the PDU (Protocol Data Unit) structure with plaintext. How to ensure secure transmission of short messages becomes an important problem.

The existing short message encryption protection modes mainly include the following types:
(1) the short message that has been transmitted and received is protected from illegal access by adding access permission to the short message module of the mobile phone;
(2) the legal access of the short message is protected by performing special permission configuration for a single short message;
(3) the short message is protected by encrypting the content of the short message and by a key or password access;
(4) the secure transmission of a short message is achieved in the ciphertext manner by adding a security field and security content through an extended short message PDU, and the receiving party analyzes the security field to decrypt the final short message;
(5) the encryption information is firstly determined through the negotiation manner, and then the short message is transmitted.

Wherein, (1), (2) and (3) are all protection methods based on mobile phone side, and (4) and (5) are protection methods based on the wireless side and network side.

Generally speaking, the protection methods based on the wireless side and network side are more important than the protection methods based on mobile phone side since the mobile phone is commonly in our hands, so we pay more attention on the security of SMS in the wireless transmission and network transmission.

The existing protection methods of the wireless side and network side generally require an extension or modification of the short message PDU format, and in addition, the negotiation of encryption algorithm and transmission of the key should also be implemented. Wherein, the transmission of key and encryption algorithm is per se not secure.

Related technologies are known from WO 99/35784A1, US 2009/265552A1 and US 2009/325543A1.

### Summary of the Invention

The technical problem to be solved is to provide a method and system for implementing short message encryption so as to ensure secure transmission of the short message services (SMS).

The features of the method according to the present invention are defined in the independent claims. Further improvements and embodiments are provided in the dependent claims.

Provided is a method for implementing short message encryption, comprising the following steps of:
a mobile station (MS) of a transmitting party encrypting a short message to be transmitted using a cipher key (CK) of the transmitting party as an encryption factor and then sending the short message out;
a mobile switching center (MSC) to which the MS of the transmitting party belongs decrypting the short message using the CK of the transmitting party as a decryption factor after receiving the short message, and then sending the short message to a short message service center (SC) through an interworking message service center (IWMSC);
after receiving the short message transmitted by the SC through a gateway mobile switching center (GMSC), an MSC to which an MS of a receiving party belongs encrypting the short message using a CK of the receiving party as an encryption factor, and then sending the short message to the MS of the receiving party;
after receiving the short message, the MS of the receiving party decrypting the short message using the CK of the receiving party as a decryption factor, thereby restoring a content of the short message.

The above method further has the following feature:
the step of the MS of the transmitting party encrypting a short message to be transmitted using the CK of the transmitting party as an encryption factor and then sending the short message out comprises: the MS of the transmitting party encrypting user data (UD) of a protocol data unit (PDU) of the short message to be transmitted using the CK of the transmitting party as the encryption factor through an encryption-decryption module of itself, setting an encryption identifier in the PDU of the short message to be transmitted, and then sending the short message out;
the step of the MSC to which the MS of the transmitting party belongs decrypting the short message using the CK of the transmitting party as a decryption factor after receiving the short message comprises: after receiving the short message, if judging according to the encryption identifier that the short message is an encrypted short message, the MSC to which the MS of the transmitting party belongs decrypting the UD of the PDU of the short message using the CK of the transmitting party as the decryption factor through an encryption-decryption module of itself;
the step of the MSC to which the MS of the receiving party belongs encrypting the short message using the CK of the receiving party as an encryption factor after receiving the short message comprises: after receiving the short message, if judging according to the encryption identifier therein that the short message needs to be encrypted, the MSC to which the MS of the receiving party belongs encrypting the UD of the PDU of the short message using the CK of the receiving party as the encryption factor through an encryption-decryption module of itself;
the step of the MS of the receiving party decrypting the short message using the CK of the receiving party as a decryption factor after receiving the short message comprises: after receiving the short message, if judging according to the encryption identifier therein that the short message is an encrypted short message, the MS of the receiving party decrypting the UD of the PDU of the short message using the CK of the receiving party as the decryption factor through an encryption-decryption module of itself.

The above method further has the following feature:
after decrypting the UD of the PDU of the short message, the MSC to which the MS of the transmitting party belongs encrypts the UD of the PDU of the short message using a user identifier of the receiving party as the encryption factor through the encryption-decryption module of itself, and then transmits the short message to the SC through the IWMSC;
after receiving the short message transmitted by the SC through the GMSC, if it is judged according to the encryption identifier therein that the short message needs to be encrypted, the MSC to which the MS of the receiving party belongs firstly decrypts the UD of the PDU of the short message using the user identifier of the receiving party as the decryption factor through the encryption-decryption module of itself, and then encrypts the UD of the PDU of the short message using the CK of the receiving party as the encryption factor.

Preferably, the above method further has the following feature:
the CK is calculated with a particular algorithm from a random value (RAND) of generated in an authentication process of the MS and MSC of a party to which the CK belongs and a root key (Ki) of a user.

Preferably, the above method further has the following feature:
the user identifier of the receiving party is a mobile subscriber international ISDN number (MSISDN) or International Mobile Subscriber Identification Number (IMSI) of the receiving party.

Preferably, the above method further has the following feature:
before the MS of the transmitting party encrypts the short message to be transmitted, the MS provides an interface for the user of the transmitting party to select whether to encrypt the short message to be transmitted, and if the user of the transmitting party selects to encrypt, the MS of the transmitting party encrypts the short message to be transmitted.

Also provided is a method for transmitting an encrypted short message, comprising the following steps of:
a mobile station (MS) of a transmitting party encrypting a short message to be transmitted using a cipher key (CK) of the transmitting party as an encryption factor and then sending the short message out;
a mobile switching center (MSC) to which the MS of the transmitting party belongs decrypting the short message using the CK of the transmitting party as a decryption factor after receiving the short message, and then sending the short message to a short message service center (SC) through an interworking message service center (IWMSC).

The above method further has the following feature:
the step of the MS of the transmitting party encrypting a short message to be transmitted using the CK of the transmitting party as an encryption factor and then sending the short message out comprises: the MS of the transmitting party encrypting user data (UD) of a protocol data unit (PDU) of the short message to be transmitted using the CK of the transmitting party as the encryption factor through an encryption-decryption module of itself, setting an encryption identifier in the PDU of the short message to be transmitted, and then sending the short message out;
the step of the MSC to which the MS of the transmitting party belongs decrypting the short message using the CK of the transmitting party as a decryption factor after receiving the short message comprises: after receiving the short message, if judging according to the encryption identifier that the short message is an encrypted short message, the MSC to which the MS of the transmitting party belongs decrypting the UD of the PDU of the short message using the CK of the transmitting party as the decryption factor through an encryption-decryption module of itself;

The above method further has the following feature:
after decrypting the UD of the PDU of the short message, the MSC to which the MS of the transmitting party belongs encrypts the UD of the PDU of the short message using a user identifier of the receiving party as the encryption factor through the encryption-decryption module of itself, and then transmits the short message to the SC through the IWMSC.

Also provided is a method for receiving an encrypted short message, comprising the following steps of:
after receiving the short message transmitted by a short message service center (SC) through a gateway mobile switching center (GMSC), an mobile switching center (MSC) to which a mobile station (MS) of a receiving party belongs encrypting the short message using a cipher key (CK) of the receiving party as an encryption factor and then sending the short message to the MS of the receiving party;
after receiving the short message, the MS of the receiving party decrypting the short message using the CK of the receiving party as a decryption factor, thereby restoring a content of the short message.

The above method further has the following feature:
the step of the MSC to which the MS of the receiving party belongs encrypting the short message using the CK of the receiving party as an encryption factor after receiving the short message comprises: after receiving the short message, if judging according to the encryption identifier therein that the short message needs to be encrypted, the MSC to which the MS of the receiving party belongs encrypting the UD of the PDU of the short message using the CK of the receiving party as the encryption factor through an encryption-decryption module of itself;
the step of the MS of the receiving party decrypting the short message using the CK of the receiving party as a decryption factor after receiving the short message comprises: after receiving the short message, if judging according to the encryption identifier therein that the short message is an encrypted short message, the MS of the receiving party decrypting the UD of the PDU of the short message using the CK of the receiving party as the decryption factor through an encryption-decryption module of itself.

The above method further has the following feature:
after receiving the short message transmitted by the SC through the GMSC, if it is judged according to the encryption identifier therein that the short message needs to be encrypted, the MSC to which the MS of the receiving party belongs firstly decrypts the UD of the PDU of the short message using the user identifier of the receiving party as the decryption factor through the encryption-decryption module of itself, and then encrypts the UD of the PDU of the short message using the CK of the receiving party as the encryption factor.

Also provided is a system for implementing short message encryption, comprising an MS of a transmitting party, an MSC to which the MS of the transmitting party belongs, an MSC to which an MS of a receiving party belongs, the MS of the receiving party, and the MS and MSC of the transmitting party and the MS and MSC of the receiving party are all configured with encryption-decryption modules,
the MS of the transmitting party is configured to encrypt a short message to be transmitted using a cipher key (CK) of the transmitting party as an encryption factor through the encryption-decryption module of itself and then send the short message out;
the MSC to which the MS of the transmitting party belongs is configured to decrypt the short message using the CK of the transmitting party as a decryption factor after receiving the short message, and then send the short message to a short message service center (SC) through an interworking message service center (IWMSC);
the MSC to which the MS of the receiving party belongs is configured to encrypt the short message using a CK of the receiving party as an encryption factor through the encryption-decryption module of itself after receiving the short message transmitted by the SC through the GMSC and then send the short message to the MS of the receiving party;
the MS of the receiving party is configured to decrypt the short message using the CK of the receiving party as a decryption factor through the encryption-decryption module of itself after receiving the short message, thereby restoring a content of the short message.

Also provided is a mobile station (MS), comprising a transmitting module and a receiving module, as well as an encryption-decryption module, the encryption-decryption module comprises an encryption sub-module and a decryption sub-module, wherein,
the encryption sub-module is configured to encrypt a short message to be transmitted using a current CK as an encryption factor, and send the short message out through the transmitting module;
the decryption sub-module is configured to decrypt the short message received by the receiving module using the current CK as a decryption factor, thereby restoring a content of the short message.

Preferably, the above MS further has the following feature:
the MS further comprises an interface module,
the interface module is configured to provide an interface for a user to select whether to encrypt the short message to be transmitted, and if the user selects to encrypt, inform the encryption module so that the encryption module encrypts the short message to be transmitted.

Also provided is a mobile switching center (MSC), comprising a transmitting module and a receiving module, as well as an encryption-decryption module, the encryption-decryption module comprises an encryption sub-module and a decryption sub-module, wherein,
the decryption sub-module is configured to decrypt the short message using the CK of the transmitting party as a decryption factor after the receiving module receives the short message from the MS of the transmitting party, and then send the short message to a short message service center (SC) through the transmitting module;
the encryption sub-module is configured to encrypt the short message using a CK of the receiving party as an encryption factor after the receiving module receives the short message from the SC and then send the short message to the MS of the receiving party.

Preferably, the above MSC further has the following feature:
the encryption sub-module is further configured to, after the decryption sub-module decrypts the short message using the CK of the transmitting party, encrypt the short message using a user identifier of the receiving party as the encryption factor, and then transmit the short message to the SC through the transmitting module;
the decryption sub-module is further configured to, after the receiving module receives the short message from the SC, firstly decrypt the short message using the user identifier of the receiving party as the decryption factor, and then encrypt the short message using the CK of the receiving party as the encryption factor through the encryption sub-module.

Compared with the prior art, in the patent document, by adding a corresponding encryption-decryption module into the MS (Mobile Station) and MSC (Mobile Switching Center), the short message is encrypted and decrypted using the CK (Cipher Key) which is variable with the RAND (random value) as the encryption-decryption factor, and the key is highly protected during the whole process and is not shared between the receiving and transmitting ends, so that the encrypted short message has a high confidentiality. Moreover, the encryption-decryption module may be provided by the third party and embedded into the terminal and network device, and is configured to change the algorithm as needed and be responsible for performing encryption-decryption operation for the content data of the short message. In this way, even the network, terminal device supplier and operator cannot steal the encrypted short message. In addition, in the scheme of the patent document, the encryption factor is different at each time, which increases the difficulty of cracking from the wireless transmission environment. Besides, the security of the whole transmission environment can be achieved through optional configurations.

### Brief Description of Drawings

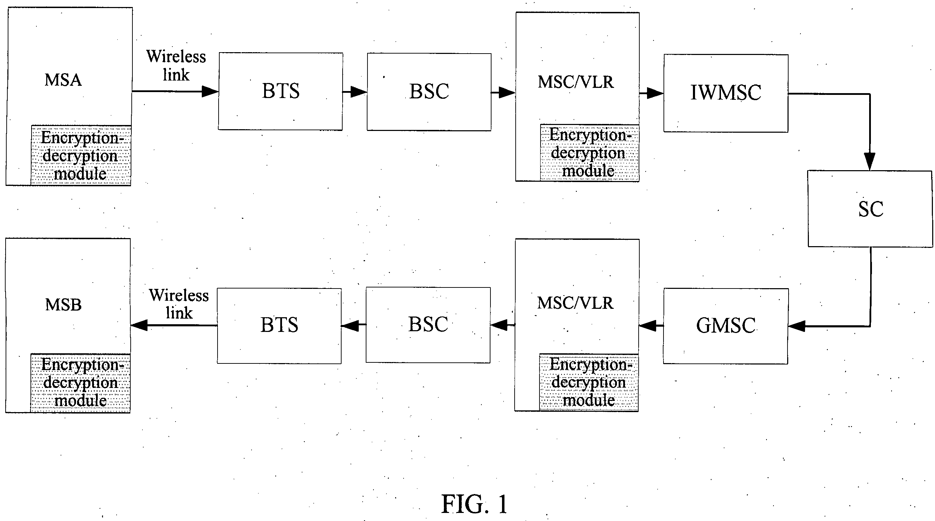

FIG. 1 illustrates the structure of the system for encrypting a short message according to an example of the present invention;
FIG. 2 is a flowchart of the MS sending an encrypted short message;
FIG. 3 a flowchart of the MS receiving an encrypted short message;
FIG. 4 a flowchart of sending an encrypted short message to the short message service center (SC);
FIG. 5 a flowchart of the SC sending an encrypted short message to the receiving party.

### Preferred Embodiments of the Invention

The basic concept of the present invention is that an encryption-decryption module is configured in the MS and MSC, and the encryption-decryption module encrypts and decrypts the user data (UD) of the short message using the CK (Cipher Key) as the encryption-decryption factor, thereby enhancing the security of the wireless transmission environment of the short message. Optionally, suitable configuration may be also implemented to achieve the security of the short message in the subsequent network environment, thereby achieving the security of the whole transmission environment.

The method for implementing short message encryption according to the example of the present invention comprises the following steps:
Step 1, the MS (also called as MS A) of the transmitting party encrypts the UD of the PDU of the short message to be transmitted using the CK of the transmitting party as the encryption factor through an encryption-decryption module of itself, sets an encryption identifier in the PDU of the short message to be transmitted, and then sends the short message out;
Step 2, after the short message reaches the MSC to which the MS A belongs via a BSS (Base Station Subsystem, comprising a BTS (Base Transceiver Station) and a BSC (Base Station Controller)) and the MSC receives the short message, if judging according to the encryption identifier therein that the short message is an encrypted short message, the MSC decrypts the UD of the PDU of the short message using the CK of the transmitting party as the decryption factor through an encryption-decryption module of itself, and then sends the short message to an SC (service center) through an IWMSC (interworking message service center);
Step 3, after the MSC to which the MS of the receiving party belongs receives the short message transmitted by the SC through the GMSC (Gateway Mobile Switching Center), if it is judged according to the encryption identifier therein that the short message needs to be encrypted, the MSC to which the MS of the receiving party belongs encrypts the UD of the PDU of the short message using the CK of the receiving party as an encryption factor through its encryption-decryption module and then sends the short message to the MS (which may be called as MS B) of the receiving party through the BTS and BSC to which the MS of the receiving party belongs;
Step 4, after receiving the short message, if judging according to the encryption identifier therein that the short message is an encrypted short message, the MS B decrypts the UD of the PDU of the short message using the CK of the receiving party as the decryption factor through an encryption-decryption module of itself, thereby restoring the content of the short message.

Wherein, the above steps 1 and 2 are flows of transmitting an encrypted short message, while steps 3 and 4 are flows of receiving an encrypted short message.

The above steps can ensure the secure transmission of the short message in the wireless link and between the MS and MSC. In order to ensure secure transmission on the MSC-IWMSCSC-GMSC-MS link, optionally, in step 2, after the MSC to which the MS of the transmitting party belongs decrypts the UD of the PDU of the short message, it encrypts the UD of the PDU of the short message using the user identifier of the receiving party as the encryption factor through an encryption-decryption module of itself, and then sends the short message to the SC through the IWMSC;
correspondingly, in step 3, after receiving the short message transmitted by the SC through the GMSC, if it is judged according to the encryption identifier therein that the short message needs to be encrypted, the MSC to which the MS of the receiving party belongs firstly decrypts the UD of the PDU of the short message using the user identifier of the receiving party as the decryption factor through the encryption-decryption module of itself, and then encrypts the UD of the PDU of the short message using the CK of the receiving party as the encryption factor.

The optional steps (encrypting or decrypting using the user identifier of the receiving party as the encryption factor) of the above steps 2 and 3 should be present or absent simultaneously in the whole system so as to ensure the consistence of the whole system.

The above user identifier of the receiving party is MSISDN (Mobile Subscriber International ISDN/PSTN number) or IMSI (International Mobile Subscriber Identification Number) of the receiving party.

The above encryption-decryption module is not limited to a software encryption-decryption module, and may be a hardware encryption-decryption module, and even may be a hardware encryption-decryption module capable of updating the encryption-decryption algorithm.

The CK is calculated with a particular algorithm (for example, the A8 algorithm is used in the GSM system) from a random value (RAND) generated in an authentication process of the MS and MSC and a root key (Ki) of a user. RAND is a random number distributed to the MS during the authentication process of the network for the user when the signaling link is established. Ki is a secure key (128bit) shared by the USIM (Universal Subscriber Identity Module) and the HLR/AUC (home location register/authentication center) of the home network.

The encryption identifier may be implemented using the remaining Bits of the PDU or by means of an extended field.

In addition, in step 1, optionally, the MS may provide an interface for the user of the transmitting party to select whether to encrypt the short message to be transmitted, and if the user of the transmitting party select to encrypt, the MS of the transmitting party encrypts the UD of the PDU of the short message to be transmitted.

The system in the example of the present invention comprises the MS of the transmitting party, the MSC to which the MS of the transmitting party belongs, the MSC to which the MS of the receiving party belongs, and the MS of the receiving party, as described above.

In the present invention, in order to transmit the encrypted short message more safely, the modification is only to configure an encryption-decryption module in the MS and the MSC, and other fixed flows of short message are not changed.

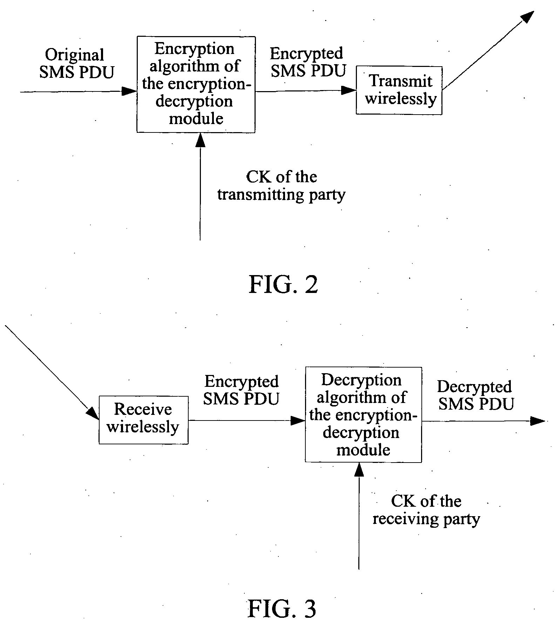

FIG. 2 is the flow of the MS sending an encrypted short message, and this figure describes the process of encrypting a short message.

When the user completely edits the short message and organizes the PDU data of the short message and prepares to send it out, if the user selects to encrypt the short message, the MS encrypts the user data part of the PDU of the short message using its own CK (the CK of the transmitting party) as the encryption factor of the encryption-decryption module, and then sets the short message with an encryption short message identifier, and finally transmits the short message via an air interface. As the specific implementation, the remaining bits Bit3 and Bit2 in the DSC data coding standard of the PDU can be optionally used as 11 for the encryption identifier (currently the 11 combination is not used yet). This step can ensure the high security of wireless transmission. If the user selects not to encrypt the short message, the short message is directly transmitted via the air interface according to the normal flow. In order to simplify the description, the subsequent description only involves the processing flow of short message decryption, since non-encryption of short message uses the normal flow.

FIG. 3 is the flow of the MS receiving an encrypted short message, and this figures describes how the MS receives the encrypted short message.

After the MS receives a short message, it judges whether the encryption identifier is the encryption mode, if yes, it decrypts the user data part of the PDU of the short message using its own CK (the CK of the receiving party) as the decryption factor of the encryption-decryption module, thereby restoring the content of the short message.

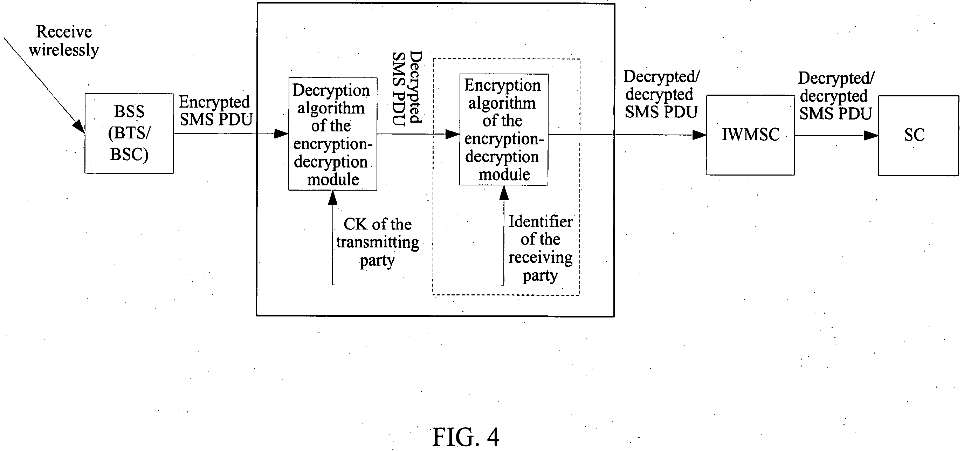

FIG. 4 is the flow of sending an encrypted short message to the short SC, and this figure describes how the encrypted short message sent from the MS is sent to the SC. Wherein, the dotted line block is an optional step.

The encrypted short message sent from the MS is sent to the MSC for further forwarding after being received by the BSS, and the MSC needs to judge whether the short message is an encrypted short message when receiving the PDU of the short message, and if yes, it needs to decrypt the short message using the same CK shared by the transmitting party as the decryption factor of the decryption algorithm of the encryption-decryption module. Here it should be noted that the reason that decryption must be performed is that the short message is transmitted according to the store-and-forward mechanism, and the CK obtained by the authentication of the transmitting party cannot be obtained by the receiving party. Even if the short message is decrypted here, the practice in the previous process has ensured the high security of the whole link from the MS to the MSC. In order to ensure the high security of the whole link from the MSC to the SC, we can implement further encryption operation optionally, and in order to ensure that the encryption operation can be correctly decrypted, the identifier of the receiving party is selected (the MSISDN may be selected as an example) as the encryption factor to encrypt the short message that has just been decrypted. Afterwards, the encrypted short message is always stored with encryption when being delivered to the IWMSC and finally to the SC, thereby ensuring the security of the link between the MSC and the SC. The security of the whole link can be ensured as long as the security of the encryption-decryption algorithm is ensured. Of course, the optional portion in the figure may not be used, thus the subsequently transmitted short message is a plaintext short message only with the encryption identifier, and the security of the link from the MSC to the SC will have a certain loss.

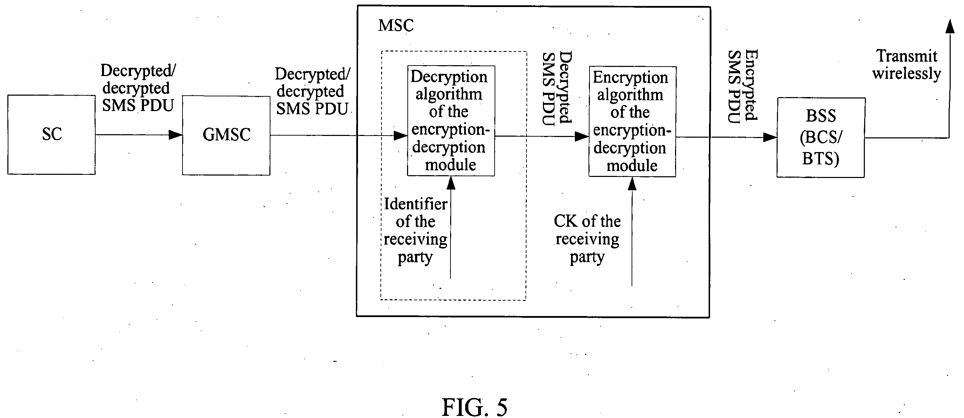

FIG. 5 is the flow of the SC sending an encrypted short message to the receiving party, and this figure describes how the SC transmits the received short message to the MS of the receiving party safely. Wherein, the dotted line block is an optional step, and is simultaneously present with the dotted line block in FIG. 4.

The work of the SC after receiving the short message is to further store and forward the short message to the receiving party. The SC firstly gives the whole message to the GMSC, the GMSC then searches for the MSC to which a plurality of receiving parties belong and further sends the short message to the MSC, and the MSC forwards the short message to the MS of the receiving party through the BSS after paging the MS of the receiving party and successfully authenticating. Before forwarding the short message, the MSC needs to judge whether the short message has an encrypted short message identifier. If there is no encrypted short message identifier, the MSC transmits the short message as a normal short message; otherwise, the user data of the PDU are firstly decrypted using the identifier of the receiving party as the decryption factor of the encryption-decryption module when the whole system is provided with the optional module, and when there is no optional module, the short message per se is the decrypted content and thus does not need to be decrypted; afterwards, as for the decrypted content, the user data of the PDU is encrypted using the CK of the receiving party as the encryption factor of the encryption-decryption module, and then the encrypted short message is sent to the receiving party through the BSS system. Here it should be pointed out that the optional module must be collectively configured entirely for the sake of avoiding the transmission of the key and convenience of subsequently updating the encryption-decryption module algorithm.

Correspondingly, the MS in the example of the present invention comprises a transmitting module, a receiving module and an encryption-decryption module, the encryption-decryption module comprises an encryption sub-module and a decryption sub-module, wherein,
the encryption sub-module is configured to encrypt a short message to be transmitted using a current CK as an encryption factor, and send the short message out through the transmitting module;
the decryption sub-module is configured to decrypt the short message received by the receiving module using the current CK as a decryption factor, thereby restoring the content of the short message.

Optionally, the MS further comprises an interface module,
the interface module is configured to provide an interface for a user to select whether to encrypt the short message to be transmitted, and if the user selects to encrypt, inform the encryption module so that the encryption module encrypts the short message to be transmitted.

Correspondingly, the MSC in the example of the present invention comprises a transmitting module and a receiving module, as well as an encryption-decryption module, the encryption-decryption module comprises an encryption sub-module and a decryption sub-module, wherein,
the decryption sub-module is configured to decrypt the short message using the CK of the transmitting party as a decryption factor after the receiving module receives the short message from the MS of the transmitting party, and then send the short message to a service center (SC) through the transmitting module;
the encryption sub-module is configured to encrypt the short message using a CK of the receiving party as an encryption factor after the receiving module receives the short message from the SC and then send the short message to the MS of the receiving party.

Optionally, the encryption sub-module is further configured to, after the decryption sub-module decrypts the short message using the CK of the transmitting party, encrypt the short message using a user identifier of the receiving party as the encryption factor, and then transmit the short message to the SC through the transmitting module; the decryption sub-module is further configured to, after the receiving module receives the short message from the SC, firstly decrypt the short message using the user identifier of the receiving party as the decryption factor, and then encrypt the short message using the CK of the receiving party as the encryption factor through the encryption sub-module.

A person having ordinary skill in the art can appreciate that all or part of the steps of the above method may be implemented by instructing related hardware with a program, which may be stored in a computer-readable medium, such as a read-only memory, a magnetic disk or an optical disk. Optionally, all or part of the steps of the above examples may also be implemented by using one or more integrated circuits. Correspondingly, each module/unit in the above examples may be implemented in the form of hardware, or in the form of software functional modules. The present invention is not limited to any particular form of combination of hardware and software.

The above examples are only preferred examples of the present invention, and are not used to limit the present invention. For a person having ordinary skill in the art, the present invention may have various modifications and changes falling within the scope of the claims.

### Industrial Applicability

In the present invention, by adding a corresponding encryption-decryption module into the MS and MSC, the short message is encrypted and decrypted using the CK which is variable with the RAND (random value) as the encryption-decryption factor, so as to ensure that the network, terminal device supplier and operator cannot steal the encrypted short message, and to ensure secure transmission of SMS. In addition, in the scheme of the present invention, the encryption factor is different at each time, which increases the difficulty of cracking from the wireless transmission environment. Besides, the security of the whole transmission environment can be achieved through optional configurations.

## Claims

1. A method for implementing short message encryption, comprising the following steps of:
a mobile station MS of a transmitting party encrypting a short message to be transmitted using a cipher key CK of the transmitting party as an encryption factor and then sending the short message out;
a mobile switching center MSC to which the MS of the transmitting party belongs decrypting the short message using the CK of the transmitting party as a decryption factor after receiving the short message, and then sending the short message to a short message service center SC through an interworking message service center IWMSC;
after receiving the short message transmitted by the SC through a gateway mobile switching center GMSC, an MSC to which an MS of a receiving party belongs encrypting the short message using a CK of the receiving party as an encryption factor and then sending the short message to the MS of the receiving party;
after receiving the short message, the MS of the receiving party decrypting the short message using the CK of the receiving party as a decryption factor, thereby restoring a content of the short message,
wherein the CK is calculated with a particular algorithm from a random value RAND generated in an authentication process of the MS and MSC of a party to which the CK belongs and a root key Ki of a user;
wherein the step of the MS of the transmitting party encrypting a short message to be transmitted using the CK of the transmitting party as an encryption factor and then sending the short message out comprises: the MS of the transmitting party encrypting user data UD of a protocol data unit PDU of the short message to be transmitted using the CK of the transmitting party as the encryption factor through an encryption-decryption module of itself, setting an encryption identifier in the PDU of the short message to be transmitted, and then sending the short message out;
the step of the MSC to which the MS of the transmitting party belongs decrypting the short message using the CK of the transmitting party as a decryption factor after receiving the short message comprises: after receiving the short message, if judging according to the encryption identifier therein that the short message is an encrypted short message, the MSC to which the MS of the transmitting party belongs decrypting the UD of the PDU of the short message using the CK of the transmitting party as the decryption factor through an encryption-decryption module of itself;
the step of the MSC to which the MS of the receiving party belongs encrypting the short message using the CK of the receiving party as an encryption factor after receiving the short message comprises: after receiving the short message, if judging according to the encryption identifier therein that the short message needs to be encrypted, the MSC to which the MS of the receiving party belongs encrypting the UD of the PDU of the short message using the CK of the receiving party as the encryption factor through an encryption-decryption module of itself;
the step of the MS of the receiving party decrypting the short message using the CK of the receiving party as a decryption factor after receiving the short message comprises: after receiving the short message, if judging according to the encryption identifier therein that the short message is an encrypted short message, the MS of the receiving party decrypting the UD of the PDU of the short message using the CK of the receiving party as the decryption factor through an encryption-decryption module of itself;
**characterised by** after decrypting the UD of the PDU of the short message, the MSC to which the MS of the transmitting party belongs encrypts the UD of the PDU of the short message using a user identifier of the receiving party as the encryption factor through the encryption-decryption module of itself, and then transmits the short message to the SC through the IWMSC;
after receiving the short message transmitted by the SC through the GMSC, if it is judged according to the encryption identifier therein that the short message needs to be encrypted, the MSC to which the MS of the receiving party belongs firstly decrypts the UD of the PDU of the short message using the user identifier of the receiving party as the decryption factor through the encryption-decryption module of itself, and then encrypts the UD of the PDU of the short message using the CK of the receiving party as the encryption factor.

2. The method according to claim 1, wherein,
the user identifier of the receiving party is a mobile subscriber international ISDN number MSISDN or International Mobile Subscriber Identification Number IMSI of the receiving party.

3. The method according to claim 1 or 2, wherein,
before the MS of the transmitting party encrypts the short message to be transmitted, the MS provides an interface for the user of the transmitting party to select whether to encrypt the short message to be transmitted, and if the user of the transmitting party selects to encrypt, the MS of the transmitting party encrypts the short message to be transmitted.

4. A method for transmitting an encrypted short message, comprising the following steps of:
a mobile station MS of a transmitting party encrypting a short message to be transmitted using a cipher key CK of the transmitting party as an encryption factor and then sending the short message out;
a mobile switching center MSC to which the MS of the transmitting party belongs decrypting the short message using the CK of the transmitting party as a decryption factor after receiving the short message, and then sending the short message to a short message service center SC through an interworking message service center IWMSC,
wherein the CK is calculated with a particular algorithm from a random value (RAND) generated in an authentication process of the MS and MSC of a party to which the CK belongs and a root key Ki of a user;
wherein the step of the MS of the transmitting party encrypting a short message to be transmitted using the CK of the transmitting party as an encryption factor and then sending the short message out comprises: the MS of the transmitting party encrypting user data (UD) of a protocol data unit (PDU) of the short message to be transmitted using the CK of the transmitting party as the encryption factor through an encryption-decryption module of itself, setting an encryption identifier in the PDU of the short message to be transmitted, and then sending the short message out;
the step of the MSC to which the MS of the transmitting party belongs decrypting the short message using the CK of the transmitting party as a decryption factor after receiving the short message comprises: after receiving the short message, if judging according to the encryption identifier therein that the short message is an encrypted short message, the MSC to which the MS of the transmitting party belongs decrypting the UD of the PDU of the short message using the CK of the transmitting party as the decryption factor through an encryption-decryption module of itself;
**characterised by** after decrypting the UD of the PDU of the short message, the MSC to which the MS of the transmitting party belongs encrypts the UD of the PDU of the short message using a user identifier of the receiving party as the encryption factor through the encryption-decryption module of itself, and then transmits the short message to the SC through the IWMSC.

5. A method for receiving an encrypted short message, comprising the following steps of:
after receiving the short message transmitted by a short message service center SC through a gateway mobile switching center GMSC, an mobile switching center MSC to which a mobile station (MS) of a receiving party belongs encrypting the short message using a cipher key CK of the receiving party as an encryption factor and then sending the short message to the MS of the receiving party;
after receiving the short message, the MS of the receiving party decrypting the short message using the CK of the receiving party as a decryption factor, thereby restoring a content of the short message,
wherein the CK is calculated with a particular algorithm from a random value RAND generated in an authentication process of the MS and MSC of a party to which the CK belongs and a root key Ki of a user;
wherein the step of the MSC to which the MS of the receiving party belongs encrypting the short message using the CK of the receiving party as an encryption factor after receiving the short message comprises: after receiving the short message, if judging according to the encryption identifier therein that the short message needs to be encrypted, the MSC to which the MS of the receiving party belongs encrypting the UD of the PDU of the short message using the CK of the receiving party as the encryption factor through an encryption-decryption module of itself;
the step of the MS of the receiving party decrypting the short message using the CK of the receiving party as a decryption factor after receiving the short message comprises: after receiving the short message, if judging according to the encryption identifier therein that the short message is an encrypted short message, the MS of the receiving party decrypting the UD of the PDU of the short message using the CK of the receiving party as the decryption factor through an encryption-decryption module of itself;
**characterised by** after receiving the short message transmitted by the SC through the GMSC, if it is judged according to the encryption identifier therein that the short message needs to be encrypted, the MSC to which the MS of the receiving party belongs firstly decrypts the UD of the PDU of the short message using the user identifier of the receiving party as the decryption factor through the encryption-decryption module of itself, and then encrypts the UD of the PDU of the short message using the CK of the receiving party as the encryption factor.

6. A system for implementing short message encryption, comprising a mobile station MS of a transmitting party, a mobile switching center MSC to which the MS of the transmitting party belongs, an MSC to which an MS of a receiving party belongs, the MS of the receiving party, and the MS and MSC of the transmitting party and the MS and MSC of the receiving party being all configured with encryption-decryption modules, wherein,
the MS of the transmitting party is configured to encrypt a short message to be transmitted using a cipher key CK of the transmitting party as an encryption factor through the encryption-decryption module of itself and then send the short message out;
the MSC to which the MS of the transmitting party belongs is configured to decrypt the short message using the CK of the transmitting party as a decryption factor through the encryption-decryption module of itself after receiving the short message, and then send the short message to a short message service center SC through an interworking message service center IWMSC;
the MSC to which the MS of the receiving party belongs is configured to encrypt the short message using a CK of the receiving party as an encryption factor through the encryption-decryption module of itself after receiving the short message transmitted by the SC through the GMSC and then send the short message to the MS of the receiving party;
the MS of the receiving party is configured to decrypt the short message using the CK of the receiving party as a decryption factor through the encryption-decryption module of itself after receiving the short message, thereby restoring a content of the short message,
wherein the CK is calculated with a particular algorithm from a random value RAND generated in an authentication process of the MS and MSC of a party to which the CK belongs and a root key Ki of a user;
wherein the MS of the transmitting party encrypts a short message to be transmitted using the CK of the transmitting party as an encryption factor through the encryption-decryption module of itself and then sends the short message out comprises: the MS of the transmitting party encrypting user data UD of a protocol data unit PDU of the short message to be transmitted using the CK of the transmitting party as the encryption factor through the encryption-decryption module of itself, setting an encryption identifier in the PDU of the short message to be transmitted, and then sending the short message out;
the MSC to which the MS of the transmitting party belongs decrypts the short message using the CK of the transmitting party as a decryption factor through the encryption-decryption module of itself after receiving the short message comprises: after receiving the short message, if judging according to the encryption identifier therein that the short message is an encrypted short message, the MSC to which the MS of the transmitting party belongs decrypting the UD of the PDU of the short message using the CK of the transmitting party as the decryption factor through the encryption-decryption module of itself;
the MSC to which the MS of the receiving party belongs encrypts the short message using the CK of the receiving party as an encryption factor through the encryption-decryption module of itself after receiving the short message comprises: after receiving the short message, if judging according to the encryption identifier therein that the short message needs to be encrypted, the MSC to which the MS of the receiving party belongs encrypting the UD of the PDU of the short message using the CK of the receiving party as the encryption factor through an encryption-decryption module of itself;
the MS of the receiving party decrypts the short message using the CK of the receiving party as a decryption factor through the encryption-decryption module of itself after receiving the short message comprises: after receiving the short message, if judging according to the encryption identifier therein that the short message is an encrypted short message, the MS of the receiving party decrypting the UD of the PDU of the short message using the CK of the receiving party as the decryption factor through an encryption-decryption module of itself;
**characterised by** after decrypting the UD of the PDU of the short message, the MSC to which the MS of the transmitting party belongs encrypts the UD of the PDU of the short message using a user identifier of the receiving party as the encryption factor through the encryption-decryption module of itself, and then transmits the short message to the SC through the IWMSC;
after receiving the short message transmitted by the SC through the GMSC, if it is judged according to the encryption identifier therein that the short message needs to be encrypted, the MSC to which the MS of the receiving party belongs firstly decrypts the UD of the PDU of the short message using the user identifier of the receiving party as the decryption factor through the encryption-decryption module of itself, and then encrypts the UD of the PDU of the short message using the CK of the receiving party as the encryption factor.

## Patentansprüche

1. Verfahren zur Implementierung einer Verschlüsselung von Kurznachrichten, umfassend die folgenden Schritte:
eine mobile Station (MS) eines sendenden Teilnehmers verschlüsselt eine zu übertragende Kurznachricht mit Hilfe eines Chiffrierschlüssels (CK, Cypher Key) von dem sendenden Teilnehmer als Verschlüsselungsfaktor und versendet anschließend die Kurznachricht;
ein Mobilvermittlungszentrum (MSC, Mobile Switching Center), zu dem die MS des sendenden Teilnehmers gehört, entschlüsselt nach dem Empfang der Kurznachricht die Kurznachricht mit Hilfe des CK von dem sendenden Teilnehmer als Entschlüsselungsfaktor, und sendet anschließend die Kurznachricht durch ein Netzanpassungs-Nachrichtendienstzentrum (IWMSC, Interworking Message Service Center) an ein Kurznachrichtendienstzentrum (SC, Service Center);
nach dem Empfang der von dem SC durch ein Gateway-Mobilvermittlungszentrum (GMSC,
Gateway Mobile Switching Center) übertragenen Kurznachricht verschlüsselt ein MSC, zu dem die MS eines empfangenden Teilnehmers gehört, mit Hilfe eines CK von dem empfangenden Teilnehmer als Verschlüsselungsfaktor die Kurznachricht und sendet anschließend die Kurznachricht an die MS des empfangenden Teilnehmers;
nach dem Empfang der Kurznachricht entschlüsselt die MS des empfangenden Teilnehmers die Kurznachricht mit Hilfe des CK von dem empfangenden Teilnehmer als Entschlüsselungsfaktor,
wobei der Inhalt der Kurznachricht wiederhergestellt wird,
wobei der CK mit einem bestimmten Algorithmus aus einem zufälligen Wert (RAND, Random Value), der in einem Authentifizierungsprozess der MS und des MSC einer Partei, zu der der CK gehört, erzeugt wurde, und mit einem Root-Key (Ki) eines Benutzers berechnet wird;
wobei der Schritt des Verschlüsselns einer zu übertragenden Kurznachricht von der MS des sendenden Teilnehmers mit Hilfe des CK von dem sendenden Teilnehmer als Verschlüsselungsfaktor und des anschließenden Versendens der Kurznachricht umfasst: die MS des sendenden Teilnehmers verschlüsselt Benutzerdaten (UD, User Data) einer Protokolldateneinheit (PDU, Protocol Data Unit) der zu übertragenden Kurznachricht mit Hilfe des CK von dem sendenden Teilnehmer als Verschlüsselungsfaktor durch ihr eigenes Verschlüsselungs- und Entschlüsselungsmodul, stellt eine Verschlüsselungskennung in der PDU der zu übertragenden Kurznachricht ein und versendet anschließend die Kurznachricht;
wobei der Schritt des Entschlüsselns der Kurznachricht mit Hilfe des CK von dem sendenden Teilnehmer als Entschlüsselungsfaktor durch das MSC, zu dem die MS des sendenden Teilnehmers gehört, nach dem Empfang der Kurznachricht umfasst: nach dem Empfang der Kurznachricht, wenn gemäß der darin enthaltenen Verschlüsselungskennung gefolgert wird, dass es sich bei der Kurznachricht um eine verschlüsselte Kurznachricht handelt, entschlüsselt das MSC, zu dem die MS des sendenden Teilnehmers gehört, die UD der PDU der Kurznachricht mit Hilfe des CK von dem sendenden Teilnehmer als Entschlüsselungsfaktor durch ihr eigenes Verschlüsselungs- und Entschlüsselungsmodul;
wobei der Schritt des Verschlüsselns der Kurznachricht mit Hilfe des CK von dem empfangenden Teilnehmer als Verschlüsselungsfaktor durch das MSC, zu dem die MS des empfangenden Teilnehmers gehört, nach dem Empfang der Kurznachricht, umfasst: nach dem Empfang der Kurznachricht, wenn gemäß der darin enthaltenen Verschlüsselungskennung gefolgert wird, dass die Kurznachricht verschlüsselt werden muss, verschlüsselt das MSC, zu dem die MS des empfangenden Teilnehmers gehört, die UD der PDU der Kurznachricht mit Hilfe des CK von dem empfangenden Teilnehmer als Verschlüsselungsfaktor durch ihr eigenes Verschlüsselungs- und
Entschlüsselungsmodul;
wobei der Schritt des Entschlüsselns der Kurznachricht mit Hilfe des CK von dem empfangenden Teilnehmer als ein Entschlüsselungsfaktor durch die MS des empfangenden Teilnehmers nach dem Empfang der Kurznachricht umfasst: nach dem Empfang der Kurznachricht, wenn gemäß der darin enthaltenen Verschlüsselungskennung gefolgert wird, dass es sich bei der Kurznachricht um eine verschlüsselte Kurznachricht handelt, entschlüsselt die MS des empfangenden Teilnehmers die UD der PDU der Kurznachricht mit Hilfe des CK von dem empfangenden Teilnehmer als Entschlüsselungsfaktor durch ihr eigenes Verschlüsselungs- und Entschlüsselungsmodul;
**dadurch gekennzeichnet, dass** nach dem Entschlüsseln der UD der PDU der Kurznachricht das MSC, zu dem die MS des sendenden Teilnehmers gehört, die UD der PDU der Kurznachricht mit Hilfe einer Benutzerkennung des empfangenden Teilnehmers als Verschlüsselungsfaktor durch ihr eigenes Verschlüsselungs- und Entschlüsselungsmodul verschlüsselt und anschließend die Kurznachricht durch das IWMSC an das SC überträgt;
wobei nach dem Empfang der von dem SC durch das GMSC übertragenen Kurznachricht, wenn gemäß der darin enthaltenen Verschlüsselungskennung gefolgert wird, dass die Kurznachricht verschlüsselt werden muss, entschlüsselt das MSC, zu dem die MS des empfangenden Teilnehmers gehört, zuerst die UD der PDU der Kurznachricht mit Hilfe der Benutzerkennung des empfangenden Teilnehmers als Entschlüsselungsfaktor durch ihr eigenes Verschlüsselungs- und
Entschlüsselungsmodul, und verschlüsselt anschließend die UD der PDU der Kurznachricht mit Hilfe des CK von dem empfangenden Teilnehmer als Verschlüsselungsfaktor.

2. Verfahren gemäß Anspruch 1, wobei
es sich bei der Benutzerkennung des empfangenden Teilnehmers um eine internationale Mobilfunkteilnehmer-ISDN-Nummer (MSISDN, Mobile Subscriber International ISDN Number) oder um eine internationale Mobilfunkteilnehmer-Identifizierungsnummer (IMSI, International Mobile Subscriber Identification Number) des empfangenden Teilnehmers handelt.

3. Verfahren gemäß Anspruch 1 oder 2, wobei
die MS, bevor die MS des sendenden Teilnehmers die Kurznachricht verschlüsselt, dem Benutzer des sendenden Teilnehmers eine Schnittstelle zur Verfügung stellt, damit der Benutzer der sendenden Teilnehmers auswählen kann, ob die zu übertragende Kurznachricht verschlüsselt werden soll, und wenn der Benutzer des sendenden Teilnehmers eine Verschlüsselung auswählt, verschlüsselt die MS des sendenden Teilnehmers die zu übertragende Kurznachricht.

4. Verfahren zur Übertragung einer verschlüsselten Kurznachricht, umfassend die folgenden Schritte:
eine mobile Station (MS) eines sendenden Teilnehmers verschlüsselt eine zu übertragende Kurznachricht mit Hilfe eines Chiffrierschlüssels (CK, Cypher Key) von dem sendenden Teilnehmer als Verschlüsselungsfaktor und versendet anschließend die Kurznachricht;
ein Mobilvermittlungszentrum (MSC, Mobile Switching Center), zu dem die MS des sendenden Teilnehmers gehört, entschlüsselt nach dem Empfang der Kurznachricht die Kurznachricht mit Hilfe des CK von dem sendenden Teilnehmer als Entschlüsselungsfaktor und sendet anschließend die Kurznachricht durch ein Netzanpassungs-Nachrichtendienstzentrum (IWMSC, Interworking Message Service Center) an ein Kurznachrichtendienstzentrum (SC, Service Center),
wobei der CK mit einem bestimmten Algorithmus aus einem zufälligen Wert (RAND, Random Value), der in einem Authentifizierungsprozess der MS und des MSC einer Partei, zu der der CK gehört, erzeugt wurde, und mit einem Root-Key (Ki) eines Benutzers berechnet wird;
wobei der Schritt des Verschlüsselns einer zu übertragenden Kurznachricht durch die MS des sendenden Teilnehmers mit Hilfe des CK von dem sendenden Teilnehmer als Verschlüsselungsfaktor und des anschließenden Versendens der Kurznachricht umfasst: die MS des sendenden Teilnehmers verschlüsselt Benutzerdaten (UD, User Data) einer Protokolldateneinheit (PDU, Protocol Data Unit) der zu übertragenden Kurznachricht mit Hilfe des CK von dem sendenden Teilnehmer als Verschlüsselungsfaktor durch ihr eigenes Verschlüsselungs- und Entschlüsselungsmodul, stellt eine Verschlüsselungskennung in der PDU der zu übertragenden Kurznachricht ein und versendet anschließend die Kurznachricht;
wobei der Schritt des Entschlüsselns der Kurznachricht mit Hilfe des CK von dem sendenden Teilnehmer als Entschlüsselungsfaktor durch das MSC, zu dem die MS des sendenden Teilnehmers gehört, nach dem Empfang der Kurznachricht umfasst: nach dem Empfang der Kurznachricht, wenn gemäß der darin enthaltenen Verschlüsselungskennung gefolgert wird, dass es sich bei der Kurznachricht um eine verschlüsselte Kurznachricht handelt, entschlüsselt das MSC, zu dem die MS des sendenden Teilnehmers gehört, die UD der PDU der Kurznachricht mit Hilfe des CK von dem sendenden Teilnehmer als den Entschlüsselungsfaktor durch ihr eigenes Verschlüsselungs- und Entschlüsselungsmodul;
**dadurch gekennzeichnet, dass** nach dem Entschlüsseln der UD der PDU der Kurznachricht das MSC, zu dem die MS des sendenden Teilnehmers gehört, die UD der PDU der Kurznachricht mit Hilfe einer Benutzerkennung des empfangenden Teilnehmers als Verschlüsselungsfaktor durch ihr eigenes Verschlüsselungs- und Entschlüsselungsmodul verschlüsselt und anschließend die Kurznachricht durch das IWMSC an das SC überträgt.

5. Verfahren zum Empfang einer verschlüsselten Kurznachricht, umfassend die folgenden Schritte:
nach dem Empfang der von dem Kurznachrichtendienstzentrum (SC, Service Center) durch ein Gateway-Mobilvermittlungszentrum (GMSC, Gateway Mobile Switching Center) übertragenen Kurznachricht verschlüsselt ein Mobilvermittlungszentrum (MSC, Mobile Switching Center), zu dem eine mobile Station (MS) eines empfangenden Teilnehmers gehört, die Kurznachricht mit Hilfe eines Chiffrierschlüssels (CK, Cypher Key) von dem empfangenden Teilnehmer als Verschlüsselungsfaktor und sendet anschließend die Kurznachricht an die MS des empfangenden Teilnehmer;
nach dem Empfang der Kurznachricht entschlüsselt die MS des empfangenden Teilnehmers die Kurznachricht mit Hilfe des CK von dem empfangenden Teilnehmer als Entschlüsselungsfaktor,
wobei der Inhalt der Kurznachricht wiederhergestellt wird,
wobei der CK mit einem bestimmten Algorithmus aus einem zufälligen Wert (RAND, Random Value), der in einem Authentifizierungsprozess der MS und des MSC einer Partei, zu der der CK gehört, erzeugt wurde, und mit einem Root-Key (Ki) eines Benutzers berechnet wird;
wobei der Schritt des Verschlüsselns der Kurznachricht mit Hilfe des CK von dem empfangenden Teilnehmer als Verschlüsselungsfaktor durch das MSC, zu dem die MS des empfangenden Teilnehmers gehört, nach dem Empfang der Kurznachricht umfasst: nach dem Empfang der Kurznachricht, wenn gemäß der darin enthaltenen Verschlüsselungskennung gefolgert wird, dass die Kurznachricht verschlüsselt werden muss, verschlüsselt das MSC, zu dem die MS des empfangenden Teilnehmers gehört, die UD der PDU der Kurznachricht mit Hilfe des CK von dem empfangenden Teilnehmer als Verschlüsselungsfaktor durch ihr eigenes Verschlüsselungs- und
Entschlüsselungsmodul;
wobei der Schritt des Entschlüsselns der Kurznachricht mit Hilfe des CK von dem empfangenden Teilnehmer als Entschlüsselungsfaktor durch die MS des empfangenden Teilnehmers nach dem Empfang der Kurznachricht umfasst: nach dem Empfang der Kurznachricht, wenn gemäß der darin enthaltenen Verschlüsselungskennung gefolgert wird, dass es sich bei der Kurznachricht um eine verschlüsselte Kurznachricht handelt, entschlüsselt die MS der empfangenden Teilnehmer die UD der PDU der Kurznachricht mit Hilfe des CK von der empfangenden Teilnehmer als den Entschlüsselungsfaktor durch ihr eigenes Verschlüsselungs- und Entschlüsselungsmodul,
**dadurch gekennzeichnet, dass** nach dem Empfang der von dem SC durch das GMSC übertragenen Kurznachricht, wenn gemäß der darin enthaltenen Verschlüsselungskennung gefolgert wird, dass die Kurznachricht verschlüsselt werden muss, das MSC, zu dem die MS des empfangenden Teilnehmers gehört, die UD der PDU der Kurznachricht mit Hilfe der Benutzerkennung des empfangenden Teilnehmers als Entschlüsselungsfaktor durch ihr eigenes Verschlüsselungs- und
Entschlüsselungsmodul entschlüsselt, und anschließend die UD der PDU der Kurznachricht mit Hilfe des CK des empfangenden Teilnehmers als Verschlüsselungsfaktor verschlüsselt.

6. System zur Implementierung einer Verschlüsselung von Kurznachrichten, umfassend eine mobile Station (MS) eines sendenden Teilnehmers, ein Mobilvermittlungszentrum (MSC, Mobile Switching Center), zu dem die MS des sendenden Teilnehmers gehört, ein MSC, zu dem eine MS eines empfangenden Teilnehmer gehört, und die MS des empfangenden Teilnehmers, wobei die MS und das MSC des sendenden Teilnehmers sowie die MS und das MSC des empfangenden Teilnehmers alle mit Verschlüsselungs- und Entschlüsselungsmodulen konfiguriert sind, wobei:
die MS des sendenden Teilnehmers dazu konfiguriert ist, eine zu übertragende Kurznachricht mit Hilfe eines Chiffrierschlüssels (CK, Cypher Key) von dem sendenden Teilnehmer als Verschlüsselungsfaktor durch ihr eigenes Verschlüsselungs- und Entschlüsselungsmodul zu verschlüsseln und anschließend die Kurznachricht zu versenden;
das MSC, zu dem die MS des sendenden Teilnehmers gehört, dazu konfiguriert ist, die Kurznachricht mit Hilfe des CK von dem sendenden Teilnehmer als Entschlüsselungsfaktor durch ihr eigenes Verschlüsselungs- und Entschlüsselungsmodul nach dem Empfang der Kurznachricht zu entschlüsseln und anschließend die Kurznachricht durch ein Netzanpassungs-Nachrichtendienstzentrum (IWMSC, Interworking Message Service Center) an ein Kurznachrichtendienstzentrum (SC, Service Center) zu senden;
das MSC, zu dem die MS des empfangenden Teilnehmers gehört, dazu konfiguriert ist, die Kurznachricht mit Hilfe eines CK von dem empfangenden Teilnehmer als Verschlüsselungsfaktor durch ihr eigenes Verschlüsselungs- und Entschlüsselungsmodul nach dem Empfang der von dem SC durch das GMSC übertragenen Kurznachricht zu verschlüsseln und anschließend die Kurznachricht an die MS des empfangenden Teilnehmers zu senden;
die MS des empfangenden Teilnehmers dazu konfiguriert ist, die Kurznachricht mit Hilfe eines CK von dem empfangenden Teilnehmer als Entschlüsselungsfaktor durch ihr eigenes Verschlüsselungs- und Entschlüsselungsmodul nach dem Empfang Kurznachricht zu entschlüsseln und dabei den Inhalt der Kurznachricht wiederherzustellen,
wobei der CK mit einem bestimmten Algorithmus aus einem zufälligen Wert (RAND, Random Value), der in einem Authentifizierungsprozess der MS und des MSC einer Partei, zu der der CK gehört, erzeugt wurde, und mit einem Root-Key (Ki) eines Benutzers berechnet wird;
wobei das Verschlüsseln der zu übertragenden Kurznachricht mit Hilfe des CK von dem sendenden Teilnehmer als ein Verschlüsselungsfaktor durch die MS des sendenden Teilnehmers und das anschließende Versenden der Kurznachricht umfassen: die MS des sendenden Teilnehmers verschlüsselt Benutzerdaten (UD, User Data) einer Protokolldateneinheit (PDU, Protocol Data Unit) der zu übertragenden Kurznachricht mit Hilfe des CK von dem sendenden Teilnehmer als Verschlüsselungsfaktor durch ihr eigenes Verschlüsselungs- und Entschlüsselungsmodul, stellt eine Verschlüsselungskennung in der PDU der zu übertragenden Kurznachricht ein und versendet anschließend die Kurznachricht;
wobei das Entschlüsseln der Kurznachricht durch das MSC, zu dem die MS des sendenden Teilnehmers gehört, mit Hilfe des CK von dem sendenden Teilnehmer als Entschlüsselungsfaktor durch ihr eigenes Verschlüsselungs- und Entschlüsselungsmodul nach dem Empfang der Kurznachricht umfasst: nach dem Empfang der Kurznachricht, wenn gemäß der darin enthaltenen Verschlüsselungskennung gefolgert wird, dass es sich bei der Kurznachricht um eine verschlüsselte Kurznachricht handelt, entschlüsselt das MSC, zu dem die MS des sendenden Teilnehmers gehört,
die UD der PDU der Kurznachricht mit Hilfe des CK von dem sendenden Teilnehmer als Entschlüsselungsfaktor durch ihr eigenes Verschlüsselungs- und Entschlüsselungsmodul;
wobei das Verschlüsseln der Kurznachricht durch das MSC, zu dem die MS des empfangenden Teilnehmers gehört, mit Hilfe des CK von dem empfangenden Teilnehmer als Verschlüsselungsfaktor durch ihr eigenes Verschlüsselungs- und Entschlüsselungsmodul nach dem Empfang der Kurznachricht umfasst: nach dem Empfang der Kurznachricht, wenn gemäß der darin enthaltenen Verschlüsselungskennung gefolgert wird, dass die Kurznachricht verschlüsselt werden muss, verschlüsselt das MSC, zu dem die MS des empfangenden Teilnehmers gehört, die UD der PDU der Kurznachricht mit Hilfe des CK von dem empfangenden Teilnehmer als Verschlüsselungsfaktor durch ihr eigenes Verschlüsselungs- und Entschlüsselungsmodul;
wobei das Entschlüsseln der Kurznachricht durch die MS des empfangenden Teilnehmers mit Hilfe des CK von dem empfangenden Teilnehmer als Entschlüsselungsfaktor durch ihr eigenes Verschlüsselungs- und Entschlüsselungsmodul nach dem Empfang der Kurznachricht umfasst:
nach dem Empfang der Kurznachricht, wenn gemäß der darin enthaltenen Verschlüsselungskennung gefolgert wird, dass es sich bei der Kurznachricht um eine verschlüsselte Kurznachricht handelt, entschlüsselt die MS des empfangenden Teilnehmers die UD der PDU der Kurznachricht mit Hilfe des CK von dem empfangenden Teilnehmer als Entschlüsselungsfaktor durch ihr eigenes Verschlüsselungs- und Entschlüsselungsmodul,
**dadurch gekennzeichnet, dass** nach dem Entschlüsseln der UD der PDU der Kurznachricht das MSC, zu dem die MS des sendenden Teilnehmers gehört, die UD der PDU der Kurznachricht mit Hilfe einer Kennung des empfangenden Teilnehmers als Verschlüsselungsfaktor durch ihr eigenes Verschlüsselungs- und Entschlüsselungsmodul verschlüsselt und anschließend die Kurznachricht durch das IWMSC an das SC überträgt;
nach dem Empfang der von dem SC durch das GMSC übertragenen Kurznachricht, wenn gemäß der darin enthaltenen Verschlüsselungskennung gefolgert wird, dass die Kurznachricht verschlüsselt werden muss, entschlüsselt das MSC, zu dem die MS des empfangenden Teilnehmers gehört, zuerst die UD der PDU der Kurznachricht mit Hilfe der Benutzerkennung des empfangenden Teilnehmers als Entschlüsselungsfaktor durch ihr eigenes Verschlüsselungs- und
Entschlüsselungsmodul, und verschlüsselt anschließend die UD der PDU der Kurznachricht mit Hilfe des CK von dem empfangenden Teilnehmer als Verschlüsselungsfaktor.

## Revendications

1. Procédé de mise en oeuvre du chiffrement de messages courts, comprenant les étapes suivantes dans lesquelles :
une station mobile (MS, mobile station) d'une partie émettrice chiffre un message court à émettre au moyen d'une clé de chiffrement (CK, cipher key) de la partie émettrice comme facteur de chiffrement, puis envoie le message court ;
un centre de commutation mobile (MSC, mobile switching center) auquel appartient la MS de la partie émettrice déchiffre le message court au moyen de la CK de la partie émettrice comme facteur de déchiffrement après avoir reçu le message court, puis envoie le message court à un centre de service (SC, service center) pour messages courts par l'intermédiaire d'un centre de service pour messages d'interfonctionnement (IWMSC, interworking message service center) ;
après avoir reçu le message court émis par le SC par l'intermédiaire d'un centre de commutation mobile passerelle (GMSC, gateway mobile switching center), un MSC auquel appartient la MS d'une partie réceptrice chiffre le message court au moyen de la CK de la partie réceptrice comme facteur de chiffrement, puis envoie le message court à la MS de la partie réceptrice ;
après avoir reçu le message court, la MS de la partie réceptrice déchiffre le message court au moyen de la CK de la partie réceptrice comme facteur de déchiffrement, en restaurant ainsi le contenu du message court,
la CK étant calculée à l'aide d'un certain algorithme à partir d'une valeur aléatoire (RAND) produite lors d'un processus d'authentification de la MS et du MSC d'une partie à laquelle appartient la CK et à partir d'une clé racine (Ki) d'un utilisateur ;
l'étape dans laquelle la MS de la partie émettrice chiffre un message court à émettre au moyen de la CK de la partie émettrice comme facteur de chiffrement, puis envoie le message court,
comprenant l'opération selon laquelle : la MS de la partie émettrice chiffre des données d'utilisateur (UD, user data) d'une unité de données de protocole (PDU, protocol data unit) du message court à émettre au moyen de la CK de la partie émettrice comme facteur de chiffrement par l'intermédiaire de son module de chiffrement et de déchiffrement, établit un identifiant de chiffrement dans la PDU du message court à émettre, puis envoie le message court ;
l'étape dans laquelle le MSC auquel appartient la MS de la partie émettrice déchiffre le message court au moyen de la CK de la partie émettrice comme facteur de déchiffrement après avoir reçu le message court comprend l'opération selon laquelle : après avoir reçu le message court, si l'on juge,
conformément à l'identifiant de chiffrement qu'il contient, que le message court est un message court chiffré, le MSC auquel appartient la MS de la partie émettrice déchiffre les UD de la PDU du message court au moyen de la CK de la partie émettrice comme facteur de déchiffrement par l'intermédiaire de son module de chiffrement et de déchiffrement ;
l'étape dans laquelle le MSC auquel appartient la MS de la partie réceptrice chiffre le message court au moyen de la CK de la partie réceptrice comme facteur de chiffrement après avoir reçu le message court comprend l'opération selon laquelle : après avoir reçu le message court, si l'on juge,
conformément à l'identifiant de chiffrement qu'il contient, que le message court a besoin d'être chiffré, le MSC auquel appartient la MS de la partie réceptrice chiffre les UD de la PDU du message court au moyen de la CK de la partie réceptrice comme facteur de chiffrement par l'intermédiaire de son module de chiffrement et de déchiffrement ;
l'étape dans laquelle la MS de la partie réceptrice déchiffre le message court au moyen de la CK de la partie réceptrice comme facteur de déchiffrement après avoir reçu le message court comprend l'opération selon laquelle : après avoir reçu le message court, si l'on juge, conformément à l'identifiant de chiffrement qu'il contient, que le message court est un message court chiffré, la MS de la partie réceptrice déchiffre les UD de la PDU du message court au moyen de la CK de la partie réceptrice comme facteur de déchiffrement par l'intermédiaire de son module de chiffrement et de déchiffrement ;
**caractérisé en ce que**, après avoir déchiffré les UD de la PDU du message court, le MSC auquel appartient la MS de la partie émettrice chiffre les UD de la PDU du message court au moyen d'un identifiant d'utilisateur de la partie réceptrice comme facteur de chiffrement par l'intermédiaire de son module de chiffrement et de déchiffrement, puis émet le message court à destination du SC par l'intermédiaire de l'IWMSC ;
après avoir reçu le message court émis par le SC par l'intermédiaire du GMSC, si l'on juge,
conformément à l'identifiant de chiffrement qu'il contient, que le message court a besoin d'être chiffré, le MSC auquel appartient la MS de la partie réceptrice déchiffre tout d'abord les UD de la PDU du message court au moyen de l'identifiant d'utilisateur de la partie réceptrice comme facteur de déchiffrement par l'intermédiaire de son module de chiffrement et de déchiffrement, puis chiffre les UD de la PDU du message court au moyen de la CK de la partie réceptrice comme facteur de chiffrement.

2. Procédé selon la revendication 1, dans lequel,
l'identifiant d'utilisateur de la partie réceptrice est un numéro international de réseau numérique à intégration de services (ISDN) d'abonné mobile (MSISDN, mobile subscriber international ISDN) ou un numéro international d'identification d'abonné mobile (IMSI, International Mobile Subscriber Identification) de la partie réceptrice.

3. Procédé selon la revendication 1 ou 2, dans lequel,
avant que la MS de la partie émettrice ne chiffre le message court à émettre, la MS fournit une interface à l'utilisateur de la partie émettrice afin qu'il choisisse ou non de chiffrer le message court à émettre et, si l'utilisateur de la partie émettrice opte pour le chiffrement, la MS de la partie émettrice procède au chiffrement le message court à émettre.

4. Procédé d'émission d'un message court chiffré, comprenant les étapes suivantes dans lesquelles :
une station mobile (MS) d'une partie émettrice chiffre un message court à émettre au moyen d'une clé de chiffrement (CK) de la partie émettrice comme facteur de chiffrement, puis envoie le message court ;
un centre de commutation mobile (MSC) auquel appartient la MS de la partie émettrice déchiffre le message court au moyen de la CK de la partie émettrice comme facteur de déchiffrement après avoir reçu le message court, puis envoie le message court à un centre de service (SC) pour messages courts par l'intermédiaire d'un centre de service pour messages d'interfonctionnement (IWMSC),
dans lequel la CK est calculée à l'aide d'un certain algorithme à partir d'une valeur aléatoire (RAND) produite lors d'un processus d'authentification de la MS et du MSC d'une partie à laquelle appartient la CK et à partir d'une clé racine (Ki) d'un utilisateur ;
l'étape dans laquelle la MS de la partie émettrice chiffre un message court à émettre au moyen de la CK de la partie émettrice comme facteur de chiffrement, puis envoie le message court,
comprenant l'opération selon laquelle : la MS de la partie émettrice chiffre des données d'utilisateur (UD) d'une unité de données de protocole (PDU) du message court à émettre au moyen de la CK de la partie émettrice comme facteur de chiffrement par l'intermédiaire de son module de chiffrement et de déchiffrement, établit un identifiant de chiffrement dans la PDU du message court à émettre, puis envoie le message court ;
l'étape dans laquelle le MSC auquel appartient la MS de la partie émettrice déchiffre le message court au moyen de la CK de la partie émettrice comme facteur de déchiffrement après avoir reçu le message court comprend l'opération selon laquelle : après avoir reçu le message court, si l'on juge,
conformément à l'identifiant de chiffrement qu'il contient, que le message court est un message court chiffré, le MSC auquel appartient la MS de la partie émettrice déchiffre les UD de la PDU du message court au moyen de la CK de la partie émettrice comme facteur de déchiffrement par l'intermédiaire de son module de chiffrement et de déchiffrement ;
**caractérisé en ce que**, après avoir déchiffré les UD de la PDU du message court, le MSC auquel appartient la MS de la partie émettrice chiffre les UD de la PDU du message court au moyen d'un identifiant d'utilisateur de la partie réceptrice comme facteur de chiffrement par l'intermédiaire de son module de chiffrement et de déchiffrement, puis émet le message court à destination du SC par l'intermédiaire de l'IWMSC.

5. Procédé de réception d'un message court chiffré, comprenant les étapes suivantes dans lesquelles :
après avoir reçu le message court émis par un centre de service (SC) pour messages courts par l'intermédiaire d'un centre de commutation mobile passerelle (GMSC), un centre de commutation mobile (MSC) auquel appartient la station mobile (MS) d'une partie réceptrice chiffre le message court au moyen d'une clé de chiffrement (CK) de la partie réceptrice comme facteur de chiffrement puis envoie le message court à la MS de la partie réceptrice ;
après avoir reçu le message court, la MS de la partie réceptrice déchiffre le message court au moyen de la CK de la partie réceptrice comme facteur de déchiffrement, en restaurant ainsi le contenu du message court,
dans lequel la CK est calculée à l'aide d'un certain algorithme à partir d'une valeur aléatoire (RAND) produite lors d'un processus d'authentification de la MS et du MSC d'une partie à laquelle appartient la CK et à partir d'une clé racine (Ki) d'un utilisateur ;
l'étape dans laquelle le MSC auquel appartient la MS de la partie réceptrice chiffre le message court au moyen de la CK de la partie réceptrice comme facteur de chiffrement après avoir reçu le message court comprenant l'opération selon laquelle : après avoir reçu le message court, si l'on juge, conformément à l'identifiant de chiffrement qu'il contient, que le message court a besoin d'être chiffré, le MSC auquel appartient la MS de la partie réceptrice chiffre les UD de la PDU du message court au moyen de la CK de la partie réceptrice comme facteur de chiffrement par l'intermédiaire de son module de chiffrement et de déchiffrement ;
l'étape dans laquelle la MS de la partie réceptrice déchiffre le message court au moyen de la CK de la partie réceptrice comme facteur de déchiffrement après avoir reçu le message court comprend l'opération selon laquelle : après avoir reçu le message court, si l'on juge, conformément à l'identifiant de chiffrement qu'il contient, que le message court est un message court chiffré, la MS de la partie réceptrice déchiffre les UD de la PDU du message court au moyen de la CK de la partie réceptrice comme facteur de déchiffrement par l'intermédiaire de son module de chiffrement et de déchiffrement,
**caractérisé en ce que**, après avoir reçu le message court émis par le SC par l'intermédiaire du GMSC, si l'on juge, conformément à l'identifiant de chiffrement qu'il contient, que le message court a besoin d'être chiffré, le MSC auquel appartient la MS de la partie réceptrice déchiffre tout d'abord les UD de la PDU du message court au moyen de l'identifiant d'utilisateur de la partie réceptrice comme facteur de déchiffrement par l'intermédiaire de son module de chiffrement et de déchiffrement, puis chiffre les UD de la PDU du message court au moyen de la CK de la partie réceptrice comme facteur de chiffrement.

6. Système de mise en oeuvre du chiffrement de messages courts, comprenant une station mobile (MS) d'une partie émettrice, un centre de commutation mobile (MSC) auquel appartient la MS de la partie émettrice, un MSC auquel appartient la MS d'une partie réceptrice, et la MS de la partie réceptrice ; la MS et le MSC de la partie émettrice ainsi que la MS et le MSC de la partie réceptrice présentant tous des modules de chiffrement et de déchiffrement, dans lequel,
la MS de la partie émettrice est configurée pour chiffrer un message court à émettre au moyen d'une clé de chiffrement (CK) de la partie émettrice comme facteur de chiffrement par l'intermédiaire de son module de chiffrement et de déchiffrement, puis pour envoyer le message court ;
le MSC auquel appartient la MS de la partie émettrice est configuré pour déchiffrer le message court au moyen de la CK de la partie émettrice comme facteur de déchiffrement par l'intermédiaire de son module de chiffrement et de déchiffrement après avoir reçu le message court, puis pour envoyer le message court à un centre de service (SC) pour messages courts par l'intermédiaire d'un centre de service pour messages d'interfonctionnement (IWMSC) ;
le MSC auquel appartient la MS de la partie réceptrice est configuré pour chiffrer le message court au moyen d'une CK de la partie réceptrice comme facteur de chiffrement par l'intermédiaire de son module de chiffrement et de déchiffrement après avoir reçu le message court émis par le SC par l'intermédiaire du GMSC, puis pour envoyer le message court à la MS de la partie réceptrice ; la MS de la partie réceptrice est configurée pour déchiffrer le message court au moyen de la CK de la partie réceptrice comme facteur de déchiffrement par l'intermédiaire de son module de chiffrement et de déchiffrement après avoir reçu le message court, en restaurant ainsi le contenu du message court,
la CK étant calculée à l'aide d'un certain algorithme à partir d'une valeur aléatoire (RAND) produite lors d'un processus d'authentification de la MS et du MSC d'une partie à laquelle appartient la CK et à partir d'une clé racine (Ki) d'un utilisateur ;
l'opération selon laquelle la MS de la partie émettrice chiffre un message court à émettre au moyen de la CK de la partie émettrice comme facteur de chiffrement par l'intermédiaire de son module de chiffrement et de déchiffrement, puis envoie le message court, comprenant l'opération selon laquelle : la MS de la partie émettrice chiffre des données d'utilisateur (UD) d'une unité de données de protocole (PDU) du message court à émettre au moyen de la CK de la partie émettrice comme facteur de chiffrement par l'intermédiaire de son module de chiffrement et de déchiffrement, établit un identifiant de chiffrement dans la PDU du message court à émettre, puis envoie le message court ;
l'opération selon laquelle le MSC auquel appartient la MS de la partie émettrice déchiffre le message court au moyen de la CK de la partie émettrice comme facteur de déchiffrement par l'intermédiaire de son module de chiffrement et de déchiffrement après avoir reçu le message court comprenant l'opération selon laquelle : après avoir reçu le message court, si l'on juge, conformément à l'identifiant de chiffrement qu'il contient, que le message court est un message court chiffré, le MSC auquel appartient la MS de la partie émettrice déchiffre les UD de la PDU du message court au moyen de la CK de la partie émettrice comme facteur de déchiffrement par l'intermédiaire de son module de chiffrement et de déchiffrement ;
l'opération selon laquelle le MSC auquel appartient la MS de la partie réceptrice chiffre le message court au moyen de la CK de la partie réceptrice comme facteur de chiffrement par l'intermédiaire de son module de chiffrement et de déchiffrement après avoir reçu le message court comprenant l'opération selon laquelle : après avoir reçu le message court, si l'on juge, conformément à l'identifiant de chiffrement qu'il contient, que le message court a besoin d'être chiffré, le MSC auquel appartient la MS de la partie réceptrice chiffre les UD de la PDU du message court au moyen de la CK de la partie réceptrice comme facteur de chiffrement par l'intermédiaire de son module de chiffrement et de déchiffrement ;
l'opération selon laquelle la MS de la partie réceptrice déchiffre le message court au moyen de la CK de la partie réceptrice comme facteur de déchiffrement par l'intermédiaire de son module de chiffrement et de déchiffrement après avoir reçu le message court comprenant l'opération selon laquelle : après avoir reçu le message court, si l'on juge, conformément à l'identifiant de chiffrement qu'il contient, que le message court est un message court chiffré, la MS de la partie réceptrice déchiffre les UD de la PDU du message court au moyen de la CK de la partie réceptrice comme facteur de déchiffrement par l'intermédiaire de son module de chiffrement et de déchiffrement,
**caractérisé en ce que**, après avoir déchiffré les UD de la PDU du message court, le MSC auquel appartient la MS de la partie émettrice chiffre les UD de la PDU du message court au moyen d'un identifiant d'utilisateur de la partie réceptrice comme facteur de chiffrement par l'intermédiaire de son module de chiffrement et de déchiffrement, puis émet le message court à destination du SC par l'intermédiaire de l'IWMSC ;
après avoir reçu le message court émis par le SC par l'intermédiaire du GMSC, si l'on juge, conformément à l'identifiant de chiffrement qu'il contient, que le message court a besoin d'être chiffré, le MSC auquel appartient la MS de la partie réceptrice déchiffre tout d'abord les UD de la PDU du message court au moyen de l'identifiant d'utilisateur de la partie réceptrice comme facteur de déchiffrement par l'intermédiaire de son module de chiffrement et de déchiffrement, puis chiffre les UD de la PDU du message court au moyen de la CK de la partie réceptrice comme facteur de chiffrement.
